# EUROPÄISCHE PATENTSCHRIFT

(11) **EP 2 561 245 B1**
(45) Veröffentlichungstag und Bekanntmachung des Hinweises auf die Patenterteilung: **27.01.2016**
(21) Anmeldenummer: 11711472.8
(22) Anmeldetag: 26.03.2011
(51) Int. Cl.: F16F 9/32, F16F 9/38

(54) **ANSCHLAGKAPPE**
STOP CAP
CAPUCHON DE BUTÉE

(30) Priorität: 23.04.2010 DE 102010018044
(43) Veröffentlichungstag der Anmeldung: 27.02.2013
(73) Patentinhaber: ThyssenKrupp Bilstein GmbH, 58256 Ennepetal (DE)
(72) Erfinder: MRUGALLA, Damian, 44225 Dortmund (DE); SCHRICHTEN, Markus, 57392 Schmallenberg (DE)
(74) Vertreter: ThyssenKrupp Intellectual Property GmbH
(86) Internationale Anmeldenummer: PCT/EP2011/001529
(87) Internationale Veröffentlichungsnummer: WO 2011/131282

(56) Entgegenhaltungen:
- DE-A1- 4 137 447
- DE-A1- 10 122 796
- DE-U1- 9 109 020
- US-A- 4 022 448
- US-A- 5 301 777
- US-A1- 2003 160 367
- US-A1- 2007 187 197

## Beschreibung

Die Erfindung betrifft eine Kappe zum Montieren auf ein Dämpferrohr eines Schwingungsdämpfers, mit einem zumindest abschnittsweise zylindrischen Außenmantelbereich und mindestens einer elastischen Federzunge, wobei an der Federzunge mindestens ein Formschlusselement angeordnet ist zur Herstellung einer formschlüssigen Verbindung zwischen der Kappe und einem Schutzelement des Schwingungsdämpfers.

Eine derartige Kappe ist aus der DE 101 22 796 B4 bekannt. Der in dieser Druckschrift beschriebene Schwingungsdämpfer umfasst ein Behälterrohr, in dem eine Kolbenstange axial beweglich geführt ist, die zumindest teilweise von einem Schutzrohr mit mindestens einer elastischen Falte abgedeckt wird. Konzentrisch zur Kolbenstange ist ein Anschlagpuffer angeordnet, der in einem Endbereich einer Einfahrbewegung der Kolbenstange auf einer Endkappe zur Anlage kommt. Die Endkappe liegt in einem fertig montierten Schwingungsdämpfer an dem Behälterrohr an. Der Anschlagpuffer, das Schutzrohr und die Endkappe bilden unabhängig vom Schwingungsdämpfer eine vormontierte Baueinheit. Die Endkappe wird von dem Anschlagpuffer bei einer Einfederbewegung der Kolbenstange in das Behälterrohr auf dieses aufgepresst. Die Endkappe weist zur Anbindung an das Schutzrohr einen zumindest abschnittsweise umlaufenden Rand auf, der in Formschluss mit dem Schutzrohr steht. Die Endkappe ist im Bereich ihres Randes radial elastisch ausgeführt. Das Behälterrohr weist in Richtung der zu montierenden Endkappe einen Längenabschnitt mit einer Durchmesserreduzierung auf.

Nachteilig an diesem bekannten Schwingungsdämpfer ist, dass der Anschlagpuffer, das Schutzrohr und die Endkappe unabhängig vom Schwingungsdämpfer eine vormontierte Baueinheit bilden sollen. Die genannten Bauteile müssen also in einem eigenen, separaten Arbeitsgang zu einer vormontierten Baueinheit zusammengebaut werden, wobei gemäß Absatz [0024] ein geeignetes Werkzeug benötigt wird, damit eine gleichmäßige elastische Verformung der elastischen Segmente der Endkappe erreicht werden kann, um das Schutzrohr mit der Endkappe verrasten zu lassen. Zur Herstellung der formschlüssigen Verbindung ist somit ein besonderes Werkzeug erforderlich, das separat beschafft oder hergestellt werden muss. Der Montageprozess wird dadurch aufwendiger und die Herstellungskosten für den Schwingungsdämpfer erhöhen sich.

Der Erfindung liegt die Aufgabe zu Grunde einen Schwingungsdämpfer der eingangs genannten Art anzugeben, der mit einem einfachen Montageprozess kostengünstig zusammengebaut werden kann.

Diese Aufgabe wird gelöst durch einen Schwingungsdämpfer mit den Merkmalen des Patentanspruchs 1. Vorteilhafte Weiterbildungen sind in den Unteransprüchen angegeben.

Erfindungsgemäß weist die mindestens eine Federzunge einen Bereich auf, der im nicht montierten Zustand bzw. im Anlieferungszustand der Kappe in radialer Richtung nach innen gegenüber dem Außenmantelbereich zurückversetzt ist, wobei der zurückversetzte Bereich ein Spreizelement aufweist, mit dem die Federzunge bei der Montage der Kappe in radialer Richtung nach außen gespreizt wird. Durch den Bereich der Federzunge, der in radialer Richtung gegenüber dem Außenmantelbereich zurückversetzt ist, ist auch das Formschlusselement radial in eine Position zurückversetzt, in der es nicht in eine formschlüssige Verbindung mit dem Schutzelement eintreten kann. Erst durch das Montieren der Kappe auf dem Dämpferrohr wird das Spreizelement betätigt, so dass die Federzunge so weit radial nach außen gespreizt wird, dass das Formschlusselement in eine Position gelangt, in der es eine formschlüssige Verbindung mit dem Schutzelement eingeht. Ein besonderes Werkzeug zur Herstellung der Formschlussverbindung ist erfindungsgemäß nicht erforderlich. Das Spreizelement wird durch den ohnehin erforderlichen Montagevorgang betätigt, mit dem die kappe auf dem Dämpferrohr montiert wird.

Nach einer bevorzugten Ausgestaltung der Erfindung wird die Kappe durch einfaches Aufschieben auf das Dämpferrohr montiert. Dabei betätigt das Dämpferrohr selbst das Spreizelement. Das Spreizelement kann dabei vorteilhaft als schräge Fläche oder abgerundeter Abschnitt ausgebildet sein, die bzw. der an der Federzunge der Kappe ausgebildet ist. Die schräge Fläche ist vorzugsweise in radialer Richtung nach innen geneigt. Eine solche geneigte Fläche oder abgerundeter Abschnitt wirkt als passives Spreizelement, das bei der Montage der Kappe mit dem Dämpferrohr zusammenwirkt, d.h. es ist kein Werkzeug erforderlich, um die Federzunge radial nach außen zu spreizen. Das Dämpferrohr kann dabei einen konstanten Durchmesser aufweisen, wobei dann die Kappe mit ihren Federzungen an den Dämpferrohrdurchmesser angepasst ist. Alternativ kann das Dämpferrohr auch eine Durchmesseraufweitung aufweisen, so dass erst der größere Durchmesser mit dem Spreizelement zusammenwirkt. Diese letztgenannte Ausführungsform wird nachstehend im Rahmen der Beschreibung eines konkreten Ausführungsbeispiels näher beschrieben. Der grundsätzliche Montageprozess ist für beide vorstehend erwähnten Varianten gleich, d.h. er ist unabhängig davon, ob das Dämpferrohr einen konstanten Durchmesser hat oder eine Durchmesseraufweitung aufweist.

Bevorzugt weist die erfindungsgemäße Kappe mehrere Federzungen auf, die über den Umfang der Kappe verteilt angeordnet sind. Besonders bevorzugt sind über den Umfang der Kappe in regelmäßigen Abständen verteilt drei Federzungen vorgesehen. Dadurch wird eine sichere formschlüssige Verbindung zwischen Kappe und Schutzelement sichergestellt.

Nach einer konstruktiv einfachen Ausführungsform der Erfindung ist das Formschlusselement als integraler Bestandteil der Federzunge ausgebildet. So kann das Formschlusselement als an der Federzunge befestigte oder angeformte Rastnase ausgebildet sein. Das Formschlusselement greift im montierten Zustand der Kappe in eine entsprechende Ausnehmung in dem Schutzelement ein, so dass diese beiden Bauelemente formschlüssig miteinander verbunden sind.

Vorteilhaft weist die Kappe eine Anschlagfläche zur Positionierung des Schutzelements auf, mit der das Schutzelement relativ zu dem Formschlusselement in einer für die Ausbildung der formschlüssigen Verbindung geeigneten Position positionierbar ist. Das Schutzelement liegt in der Montageposition an der Anschlagfläche an. Die Anschlagfläche ist an der Kappe so angeordnet, dass eine an dem Schutzelement vorgesehene Aufnahme für das Formschlusselement so relativ zu diesem positioniert ist, dass das Formschlusselement durch die bei der Montage der Kappe erfolgende Spreizung der Federzunge radial nach außen in die Aufnahme eindringt. Auf diese Weise wird das Schutzelement auf einfache Weise in der richtigen Position für die Ausbildung der Formschlussverbindung ausgerichtet. Um eine sichere und gute Positionierung des Schutzelements relativ zu der Kappe zu erreichen ist nach einer bevorzugten Ausführungsform der Erfindung die Anschlagfläche als kreisringförmige Fläche ausgebildet.

Im Folgenden wird die Erfindung anhand einer ein Ausführungsbeispiel darstellenden Zeichnung näher erläutert. Im Einzelnen zeigen
- Fig. 1: einen Schwingungsdämpfer mit einer erfindungsgemäßen Kappe in einer teilweise geschnittenen Seitenansicht,
- Fig. 2a, 2b: eine teilweise geschnittene Seitenansicht der erfindungsgemäßen Kappe in zwei unterschiedlichen Montagezuständen,
- Fig. 3: den Montageablauf beim Montieren der erfindungsgemäßen Kappe auf einen Schwingungsdämpfer.

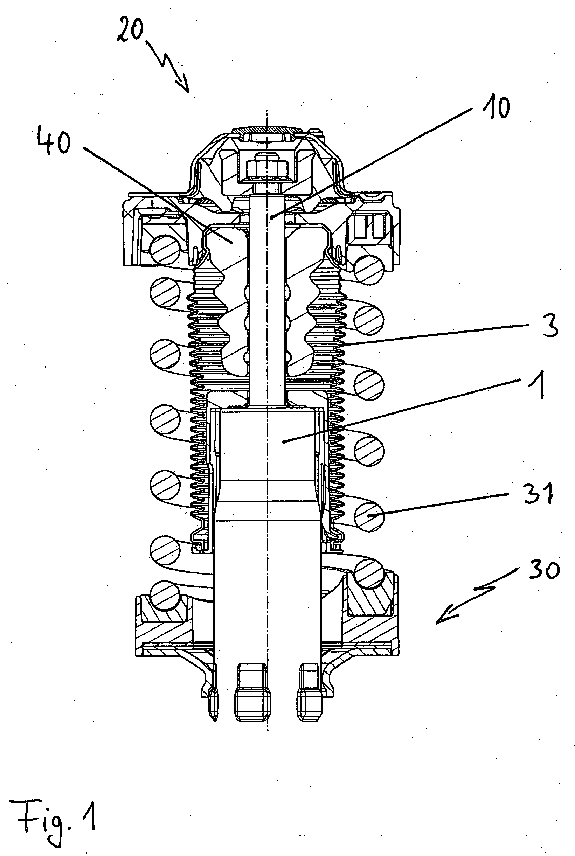

Fig. 1 zeigt einen Schwingungsdämpfer mit einer erfindungsgemäßen Kappe, die auf ein Ende des Dämpferrohres 1 des Schwingungsdämpfers montiert ist. Aus dem Dämpferrohr 1 tritt eine Kolbenstange 10 aus. Die Kolbenstange 10 ist oszillierend hin und her bewegbar in einem in Fig. 1 nicht sichtbaren Dichtungs- und Führungspaket, das am kolbenstangenaustrittsseitigen Ende des Dämpferrohres 1 angeordnet ist, geführt. Mit ihrem vom Dämpferrohr 1 abgewandten Ende ist die Kolbenstange 10 fest mit einer Dämpferlager-Baugruppe 20 verbunden. Im Folgenden wird die Dämpferlager-Baugruppe 20 verkürzt als "Dämpferlager 20" bezeichnet. Das Dämpferlager 20 ist fest mit einer nicht dargestellten Fahrzeugkarosserie eines Kraftfahrzeugs verbunden.

Das Dämpferrohr 1 trägt einen Federteller 30, auf dem sich ein Federende einer Fahrzeugtragfeder 31 abstützt. Das andere Ende der Fahrzeugtragfeder 31 stützt sich an dem Dämpferlager 20 ab.

Die Kolbenstange 10 ist durch ein diese umgebendes Schutzelement 3 vor Oberflächenbeschädigungen und Verschmutzung geschützt. Das Schutzelement 3 ist im dargestellten Ausführungsbeispiel als Faltenbalg ausgebildet. Im Inneren des Schutzelementes 3 ist ein Federelement 40 angeordnet. Das Federelement 40 stützt sich mit seinem dem Dämpferrohr 1 abgewandten Ende an dem Dämpferlager 20 ab. Das andere Ende des Federelements 40 ist dem Dämpferrohr 1 bzw. der auf dem Dämpferrohr 1 montierten Kappe zugewandt. Bei Erreichen eines bestimmten Einfederungsgrades der Kolbenstange 10, d.h. also wenn der Teleskopschwingungsdämpfer um ein bestimmtes Maß zusammengeschoben wurde, schlägt das Federelement 40 an der Kappe an. Die erfindungsgemäße Kappe wird von Fachleuten daher auch mit dem funktionalen Begriff "Anschlagkappe" bezeichnet.

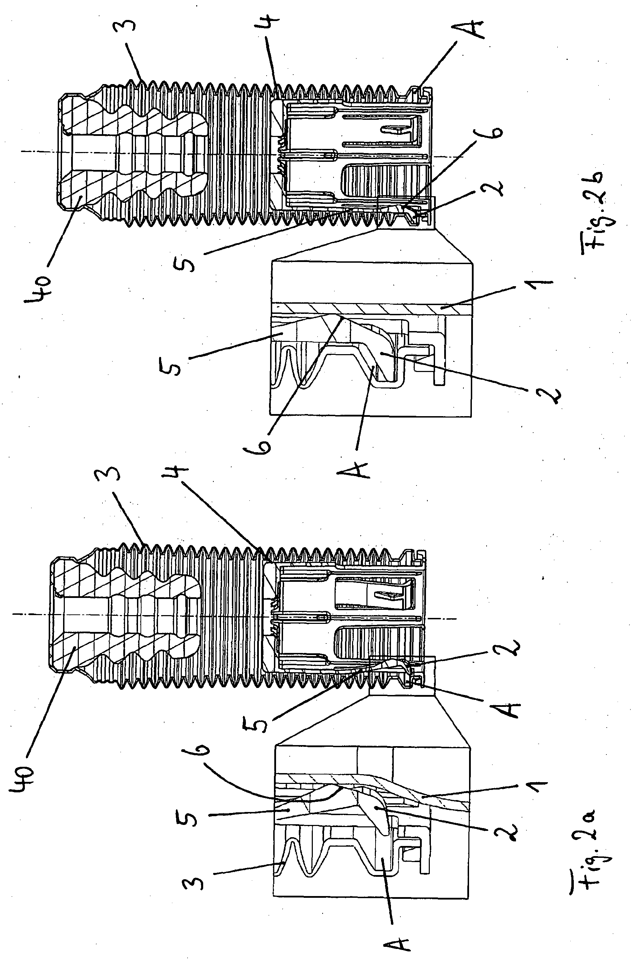

Die vorliegende Erfindung betrifft eine besondere Ausbildung der Kappe, durch die der in Fig. 1 dargestellte Schwingungsdämpfer mit einem einfachen Montageprozess kostengünstig zusammengebaut werden kann. Hierzu ist die Anschlagkappe in besonderer Weise ausgebildet, um auf einfache Weise die erfindungsgemäße formschlüssige Verbindung zwischen der Kappe und dem Schutzelement 3 herzustellen. Die besondere Ausbildung der Kappe wird nachstehend unter Bezugnahme auf die Fig. 2a, 2b näher erläutert.

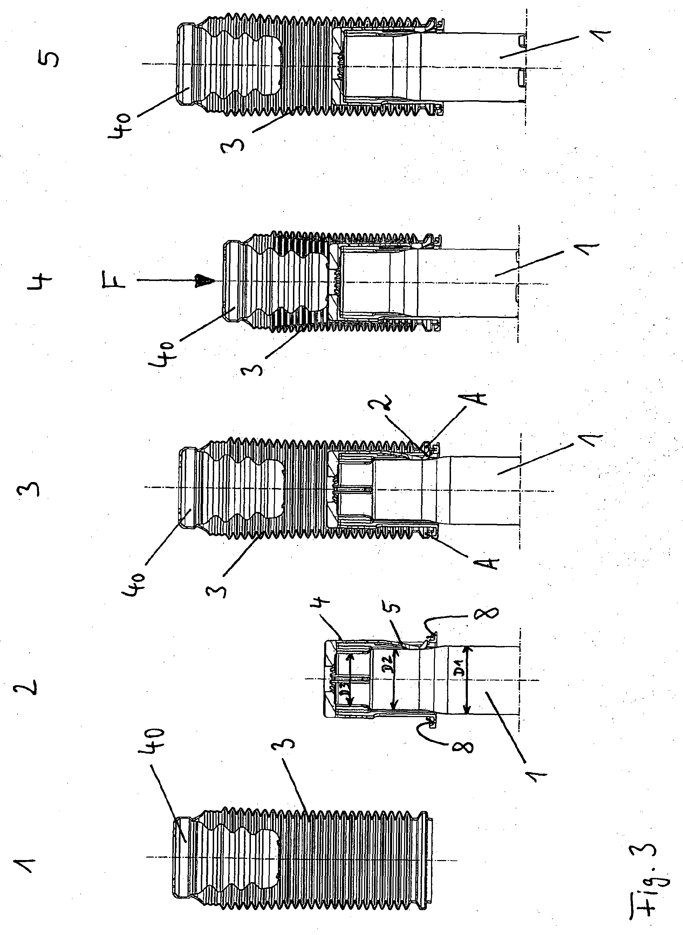

In den Fig. 2a und 2b ist in den nicht vergrößerten Darstellungen die erfindungsgemäß ausgebildete Kappe, das Schutzelement 3 sowie das Federelement 40 ohne den Schwingungsdämpfer, die Fahrzeugtragfeder 31 und das Dämpferlager 20 dargestellt. Im jeweils linken Bildteil der Fig. 2a und 2b ist eine Ausschnittvergrößerung der erfindungsgemäßen Kappe und des Schutzelementes 3 sowie ein Teilausschnitt des in den unvergrößerten Bildteilen nicht dargestellten Dämpferrohres 1 dargestellt. Der in Fig. 2a dargestellte Zustand ist der nicht montierte Zustand der erfindungsgemäßen Kappe. Die in Fig. 2a dargestellte Situation ist die Situation, in der sich die Kappe und das Schutzelement 3 unmittelbar vor der Montage auf dem Dämpferrohr 1 befinden (siehe dazu auch weiter unten zu Fig. 3).

In Fig. 2b ist die erfindungsgemäße Kappe und das Schutzelement 3 im auf das Dämpferrohr 1 montierten Zustand dargestellt. In diesem Zustand ist die erfindungsgemäße Kappe zusammen mit dem Schutzelement 3 auf dem Dämpferrohr 1 montiert und es liegt eine formschlüssige Verbindung zwischen Schutzelement 3 und Kappe vor.

In der Darstellung der Fig. 2a ist die Federzunge 5 der Kappe in ihrem zum Formschlusselement 2 hinführenden Bereich gegenüber dem zylindrischen Außenmantelbereich 4 der Kappe in radialer Richtung nach innen zurückversetzt. Es ist deutlich zu erkennen, dass das Formschlusselement 2 nicht mit einer entsprechenden Ausnehmung A des Schutzelementes 3 im Eingriff steht. Es ist somit keine Formschlussverbindung zwischen der Kappe und dem Schutzelement 3 ausgebildet. Das Schutzelement 3 könnte ohne Weiteres nach oben von der Kappe abgezogen werden, da die beiden Bauteile nicht im Sinne eine Vormontage miteinander verbunden sind.

Zur Ausbildung einer formschlüssigen Verbindung zwischen der Kappe und dem Schutzelement 3 muss das Formschlusselement 2 in die Aufnahme A des Schutzelementes 3 eingreifen. Um dies zu erreichen ist das Formschlusselement 2 an einer Federzunge 5 angeordnet. Die Federzunge 5 wird beim Aufschieben der Kappe auf das Dämpferrohr 1 in radialer Richtung nach außen gedrückt, so dass das Formschlusselement 2 in die Ausnehmung A des Schutzelements 3 formschlüssig eingreift. Dieser Zustand ist in Fig. 2b dargestellt. Um die beschriebene Spreizung der Federzunge 5 radial nach außen zu bewirken, weist der gegenüber dem zylindrischen Außenmantelbereich 4 zurückversetzte Bereich der Federzunge 5 ein Spreizelement 6 auf. Das Spreizelement 6 ist im dargestellten Ausführungsbeispiel als einfache schräge Fläche ausgebildet. Diese schräge Fläche kann auf der Außenfläche des Dämpferrohres 1 beim Aufpressen der Kappe auf das Dämpferrohrende gleiten. Das Dämpferrohr 1 weist eine Durchmesservergrößerung von einem Durchmesser D2 auf einen Durchmesser D1 auf (vgl. Fig. 3), so dass beim Aufpressen der Kappe auf das Dämpferrohr 1 die das Spreizelement 6 bildende schräge Fläche durch den sich vergrößernden Durchmesser des Dämpferrohres 1 radial nach außen gedrückt wird. Die Federzunge 5 spreizt sich dabei nach außen, so dass das Formschlusselement 2 in die Ausnehmung A des Schutzelements 3 formschlüssig eingreift. Der formschlüssige Eingriff des Formschlusselementes 2 in die Ausnehmung A des Schutzelementes 3 ist in der Fig. 2b dargestellt.

Die in Fig. 2a dargestellte Ausschnittvergrößerung stellt einen Vormontagezustand oder auch einen Anlieferungszustand der Kappe dar, in welchem die Federzungen 5 und die Formschlusselemente 2 radial nach innen gebogen sind. Erst durch Aufschieben der Kappe auf das Dämpferrohr 1 werden die Formschlusselemente 2 aufgrund der Durchmesseraufweitung des Dämpferrohres 1 radial nach außen ausgestellt.

In Fig. 3 ist die einfache Montage der erfindungsgemäßen Kappe auf dem Dämpferrohr 1 dargestellt. Unter der Ziffer 1 ist ein Schutzelement 3 dargestellt, in das ein Federelement 40 eingebracht worden ist. Unter der Ziffer 2 ist das Dämpferrohr 1 mit locker bzw. lose aufgesetzter erfindungsgemäßer Kappe dargestellt. Die Kappe ist dabei auf einem im Durchmesser reduzierten Abschnitt des Dämpferrohres angeordnet. Gut zu erkennen sind in Fig. 3 unter der Ziffer 2 die nach radial innen gebogenen Federzungen 5. Die erfindungsgemäße Kappe weist außerdem eine Anschlagfläche 8 auf, auf der sich das Schutzelement 3 zur lagegerechten Positionierung des Schutzelements 3 relativ zu der erfindungsgemäßen Kappe abstützen kann.

Das Dämpferrohr 1 weist in der in Fig. 3 dargestellten Ausführungsform in Axialrichtung gesehen drei Abschnitte mit unterschiedlichen Durchmessern auf. Die erfindungsgemäße Kappe mit ihren Federzungen ist so bemessen, dass beim Aufpressen der Kappe auf das Dämpferrohr der größte Durchmesser D1 die Ausspreizung der Federzungen und damit die formschlüssige Verbindung zwischen Schutzelement 3 und Kappe bewirkt. Auf den im Durchmesser reduzierten Abschnitt mit dem Durchmesser D2 kann die erfindungsgemäße Kappe locker aufgesetzt werden, so dass die Federzungen nicht oder nur ganz geringfügig radial nach außen gespreizt werden. In diesem Zustand kann das Schutzelement 3 wie nachstehend beschrieben auf die Kappe aufgesetzt werden und die Ausnehmungen A werden relativ zu den Formschlusselementen 2 so positioniert, dass eine formschlüssige Verbindung entsteht, wenn die Federzungen radial nach außen gespreizt werden. Der Endabschnitt des Dämpferrohres 1 weist den kleinsten Durchmesser D3 auf. Die erfindungsgemäße Kappe weist in ihrem Endbereich radial nach innen vorstehende Rippen auf. Der lichte Abstand zwischen diesen Rippen ist so auf den kleinsten Durchmesser D3 abgestimmt bemessen, dass nach dem Aufpressen der Kappe eine reibschlüssige Verbindung zwischen der Kappe und dem Dämpferrohr vorhanden ist. Auf diese Weise sitzt die aufgepresste Kappe in axialer Richtung fest auf dem Dämpferrohr.

Unter der Ziffer 3 ist in Fig. 3 das locker bzw. lose auf die erfindungsgemäße Kappe aufgesetzte Schutzelement 3 mit dem damit verbundenen Federelement 4 dargestellt. In diesem Zustand ist sowohl die Kappe locker auf das Dämpferrohr 1 als auch das Schutzelement 3 locker auf die Kappe aufgesetzt. Das Federelement 3 stützt sich auf der Anschlagfläche 8 der Kappe ab. Dadurch sind die Aufnahmen A in dem Schutzelement 3 exakt in der vorgesehenen Position zur Ausbildung des Formschlusses relativ zu den Formschlusselementen 2 der Kappe positioniert.

Unter der Ziffer 4 ist in Fig. 3 der eigentliche Montageschritt, d.h. das Aufpressen der erfindungsgemäßen Kappe auf das Dämpferrohr 1 unter Ausbildung der Formschlussverbindung zwischen Schutzelement 3 und Kappe dargestellt. Hierzu wird das Schutzelement 3, also der Faltenbalg, durch eine Kraft F von außen zusammengedrückt, so dass das Federelement 40 sich an die erfindungsgemäße Kappe anlegt. Durch die auf das Federelement 40 einwirkende Kraft F wird dann die Kappe auf das Dämpferrohr 1 aufgepresst. Da im Rahmen des üblichen Zusammenbaus von Kfz-Federbeinen mit Faltenbalg ohnehin ein so genannter "Setzhub" erfolgt, kann dieser Setzhub dazu genutzt werden, den vorstehend erwähnten Montageschritt gleich mit auszuführen. Es fällt daher insoweit kein zusätzlicher Montageschritt an.

Beim Aufpressen der Kappe auf das Dämpferrohr 1 werden die Federzungen 5 aufgrund der Durchmesseraufweitung des Dämpferrohres 1 radial nach außen gespreizt. Die Formschlusselemente 2 dringen dabei in die Aufnahmen A des Schutzelementes 3 ein, so dass Formschluss zwischen Kappe und Schutzelement 3 ausgebildet wird. Die für dieses Aufpressen der Kappe auf das Dämpferrohr 1 erforderliche Kraft ist unter Ziffer 4 in Fig. 3 mit einem Pfeil und dem Buchstaben F dargestellt.

Wird die für das Aufpressen der Kappe auf das Dämpferrohr 1 erforderliche Kraft weggenommen und das als Faltenbalg ausgebildete Schutzelement 3 entlastet, so federt der Faltenbalg in die unter der Ziffer 5 in Fig. 3 dargestellte Position zurück. Das Federelement 40 entfernt sich wieder von der Kappe und wird von dem Schutzelement 3 in einem vorgesehenen Abstand zu der Kappe positioniert. Die Kappe sitzt fest auf dem Ende des Dämpferrohres 1 auf und ist formschlüssig mit dem Schutzelement 3 verbunden.

Für die vorstehend beschriebene einfache Montage der erfindungsgemäßen Kappe und des mit ihr formschlüssig verbundenen Formschlusselementes sind keine besonderen Werkzeuge erforderlich. Die erfindungsgemäße Kappe beinhaltet bereits alle für die richtige Positionierung des Schutzelementes 3 relativ zu den Formschlusselementen 2 der Kappe erforderlichen Merkmale. Denn die korrekte Positionierung des Schutzelementes 3 relativ zu der Kappe wird durch die an der Kappe selbst ausgebildeten Anschlagflächen 8 auf einfache Weise erreicht. Außerdem wird bei der Erfindung der im Rahmen der üblichen Vorgehensweise beim Zusammenbau von Kfz-Federbeinen mit Faltenbalg erfolgende Setzhub geschickt auch für die Montage der Anordnung aus Schutzelement 3, Federelement 40 und Kappe ausgenutzt. Ein zusätzlicher Montageschritt fällt daher nicht an.

Durch die Erfindung wird eine einfache und kostengünstige Lösung zur Herstellung eines Schwingungsdämpfers mit einem die Kolbenstange schützenden Schutzelement 3 und einem als Anschlagpuffer dienenden Federelement 40 zur Verfügung gestellt.

### Bezugszeichenliste

- 1: Dämpferrohr
- 2: Formschlusselement
- 3: Schutzelement
- 4: Außenmantelbereich
- 5: Federzunge
- 6: Spreizelement
- 8: Anschlagfläche
- 10: Kolbenstange
- 20: Dämpferlager
- 30: Federteller
- 31: Fahrzeugtragfeder
- 40: Federelement
- A: Ausnehmung

## Patentansprüche

1. Kappe zum Montieren auf ein Dämpferrohr (1) eines Schwingungsdämpfers, mit einem zumindest abschnittsweise zylindrischen Außenmantelbereich (4) und mindestens einer elastischen Federzunge (5), wobei an der Federzunge (5) mindestens ein Formschlusselement (2) angeordnet ist zur Herstellung einer formschlüssigen Verbindung zwischen der Kappe und einem Schutzelement (3) des Schwingungsdämpfers, **dadurch gekennzeichnet, dass** die mindestens eine Federzunge (5) einen Bereich aufweist, der im nicht montierten Zustand der Kappe in radialer Richtung nach innen gegenüber dem Außenmantelbereich (4) zurückversetzt ist, wobei der zurückversetzte Bereich ein Spreizelement (6) aufweist, mit dem die Federzunge (5) bei der Montage der Kappe in radialer Richtung nach außen gespreizt wird.

2. Kappe nach Anspruch 1, **dadurch gekennzeichnet, dass** mehrere Federzungen (5) über den Umfang der Kappe verteilt angeordnet sind.

3. Kappe nach einem der voranstehenden Ansprüche, **dadurch gekennzeichnet, dass** das Spreizelement (6) als schräge Fläche oder abgerundeter Abschnitt ausgebildet ist, die oder der mit dem Dämpferrohr (1) bei der Montage der Kappe zusammenwirkt.

4. Kappe nach einem der voranstehenden Ansprüche, **dadurch gekennzeichnet, dass** das Formschlusselement (2) als integraler Bestandteil der Federzunge (5) ausgebildet ist.

5. Kappe nach einem der voranstehenden Ansprüche, **dadurch gekennzeichnet, dass** sie eine Anschlagfläche (8) zur Positionierung des Schutzelements (3) aufweist, mit der das Schutzelement (3) relativ zu dem Formschlusselement (2) in einer für die Ausbildung der formschlüssigen Verbindung geeigneten Position positionierbar ist.

6. Kappe nach Anspruch 5, **dadurch gekennzeichnet, dass** die Anschlagfläche (8) als kreisringförmige Fläche ausgebildet ist.

## Claims

1. Cap for mounting on a damper tube (1) of a vibration damper, having an outer circumferential region (4) which is cylindrical at least in sections and at least one elastic spring tongue (5), at least one positively locking element (2) being arranged on the spring tongue (5) for producing a positively locking connection between the cap and a protective element (3) of the vibration damper, **characterized in that** the at least one spring tongue (5) has a region which, in the non-mounted state of the cap, is set back inwards in the radial direction with respect to the outer circumferential region (4), the set-back region having a spreading element (6), by way of which the spring tongue (5) is spread outwards in the radial direction during mounting of the cap.

2. Cap according to Claim 1, **characterized in that** a plurality of spring tongues (5) are arranged distributed over the circumference of the cap.

3. Cap according to either of the preceding claims, **characterized in that** the spreading element (6) is configured as an oblique surface or rounded section which interacts with the damper tube (1) during mounting of the cap.

4. Cap according to one of the preceding claims, **characterized in that** the positively locking element (2) is configured as an integral constituent part of the spring tongue (5).

5. Cap according to one of the preceding claims, **characterized in that** it has a stop face (8) for positioning the protective element (3), by way of which stop face (8) the protective element (3) can be positioned relative to the positively locking element (2) in a position which is suitable for the formation of the positively locking connection.

6. Cap according to Claim 5, **characterized in that** the stop face (8) is configured as a circularly annular face.

## Revendications

1. Capuchon pour le montage sur un tube d'amortisseur (1) d'un amortisseur d'oscillations, comprenant une région d'enveloppe extérieure au moins en partie cylindrique (4) et au moins une langue de ressort élastique (5), au moins un élément d'engagement par correspondance géométrique (2) étant disposé sur la langue de ressort (5) afin d'établir une liaison par engagement par correspondance géométrique entre le capuchon et un élément de protection (3) de l'amortisseur d'oscillations, **caractérisé en ce que** l'au moins une langue de ressort (5) présente une région qui, dans l'état non monté du capuchon, est en retrait dans la direction radiale vers l'intérieur par rapport à la région d'enveloppe extérieure (4), la région en retrait présentant un élément d'écartement (6) avec lequel la langue de ressort (5) est écartée vers l'extérieur dans la direction radiale lors du montage du capuchon.

2. Capuchon selon la revendication 1, **caractérisé en ce que** plusieurs langues de ressort (5) sont réparties sur la périphérie du capuchon.

3. Capuchon selon l'une quelconque des revendications précédentes, **caractérisé en ce que** l'élément d'écartement (6) est réalisé sous forme de surface oblique ou de portion arrondie qui coopère avec le tube d'amortisseur (1) lors du montage du capuchon.

4. Capuchon selon l'une quelconque des revendications précédentes, **caractérisé en ce que** l'élément d'engagement par correspondance géométrique (2) est réalisé sous forme de composant intégral de la langue de ressort (5).

5. Capuchon selon l'une quelconque des revendications précédentes, **caractérisé en ce qu'**il présente une surface de butée (8) pour le positionnement de l'élément de protection (3), avec laquelle l'élément de protection (3) peut être positionné dans une position appropriée pour réaliser la connexion par engagement par correspondance géométrique par rapport à l'élément d'engagement par correspondance géométrique (2).

6. Capuchon selon la revendication 5, **caractérisé en ce que** la surface de butée (8) est réalisée sous forme de surface de forme annulaire circulaire.
